# EUROPÄISCHE PATENTSCHRIFT

(11) **EP 3 268 422 B1**
(45) Veröffentlichungstag und Bekanntmachung des Hinweises auf die Patenterteilung: **19.08.2020**
(21) Anmeldenummer: 16711175.6
(22) Anmeldetag: 11.03.2016
(51) Int. Cl.: C08J 9/224, C08J 9/232

(54) **VERFAHREN ZUR HERSTELLUNG VON PARTIKELSCHAUMSTOFFEN AUF BASIS VON THERMOPLASTISCHEN ELASTOMEREN DURCH THERMISCHES VERBINDEN MIT MIKROWELLEN**
METHOD OF MAKING PARTICULATE FOAMS BASED ON THERMOPLASTIC ELASTOMERS BY THERMAL BONDING USING MICROWAVES
PROCÉDÉ DE FABRICATION DE MOUSSES À PARTICULE À BASE D'ÉLASTOMÈRES THERMOPLASTIQUES PAR LIAGE THERMIQUE À L'AIDE DE MICRO-ONDES

(30) Priorität: 13.03.2015 EP 15159048; 20.08.2015 EP 15181756
(43) Veröffentlichungstag der Anmeldung: 17.01.2018
(73) Patentinhaber: BASF SE, 67056 Ludwigshafen am Rhein (DE)
(72) Erfinder: PRISSOK, Frank, 49448 Lemfoerde (DE); HARMS, Michael, 49356 Diepholz (DE); SCHUETTE, Markus, 49324 Melle (DE)
(74) Vertreter: BASF IP Association
(86) Internationale Anmeldenummer: PCT/EP2016/055339
(87) Internationale Veröffentlichungsnummer: WO 2016/146537

(56) Entgegenhaltungen:
- EP-A1- 0 705 682
- EP-A1- 1 016 354
- WO-A1-01/64414
- WO-A1-2007/082838

## Beschreibung

Die vorliegende Erfindung betrifft ein Verfahren zur Herstellung von Partikelschaumstoffen durch thermisches Verbinden der Schaumstoffpartikeln mittels hochfrequenter elektromagnetischer Strahlung.

Partikelschäume, wie solche aus Polypropylen oder Polystyrol werden üblicherweise in Formteilautomaten mittels Heißdampfverschweißung zu Formteilen z.B. für die Verpackungsindustrie verarbeitet. Partikelschäume aus TPU lassen sich neben dem Verschweißen mit Heißdampf auch durch Einschäumen oder Verkleben mit Polyurethan-Reaktivsystemen weiterverarbeiten. Da der Energiebedarf bei einer Heißdampfverschweißung sehr hoch ist, wird nach Alternativen gesucht. Ein Verschweißen mittels Heißluft ist im Prinzip möglich, ergibt aber bisher keine zufriedenstellenden Formteile aufgrund der ungleichmäßigen Verteilung und erfordert aufgrund des geringen Energiegehaltes von Heißluft und der schlechten Wärmeleitung von geschlossenzelligen Schäumen lange Zykluszeiten.

Ein heutzutage weit verbreitetes Herstellverfahren zur Fertigung von Bauteilen stellt die thermische Verschweißung der vorgeschäumten Partikel durch Wasserdampf dar. Die bereits geschäumten Partikel werden aus einem Silo luftpneumatisch in das Druckfüllgerät der Formteilmaschine gesaugt, mit Druckluft komprimiert und in das Formwerkzeug eingeblasen. Da die Partikel kein weiteres Treibmittel zur Verschäumung enthalten, werden sie unter Komprimierung in das Formwerkzeug gefördert (Staudruckverfahren). Das Verschweißen der einzelnen Partikel erfolgt mittels Wasserdampf als Wärmeträger bei einem Bedampfungsdruck zwischen 2,5 und 3,5 bar. Nach dem Verschweißen wird das Formteil gekühlt und der Schaumdruck soweit abgebaut, dass eine Entformung möglich ist. Eine Beschreibung des Verfahrens für z.B. EPP-Partikel findet sich in EP 0 588 321 A1.

Ein in jüngster Zeit neu hinzugekommenes Material für Partikelschaumstoffe stellt expandiertes thermoplastisches Polyurethan (E-TPU) dar, E-TPU kann analog zu den oben beschriebenen Verfahren zu hochelastischen Bauteilen verschweißt werden, die aufgrund der exzellenten Haftung zwischen den Partikeln extremen dynamischen Beanspruchungen ausgesetzt werden können. Schaumstoffe auf Basis thermoplastischer Elastomeren und Verfahren zu deren Herstellung sind beispielsweise aus WO 2005/023920, WO 2007/082838, WO 2013/153190 und WO 2014/198779 bekannt.

Die WO 2007/023091 beschreibt Polystyrolschaumstoffpartikel, welche eine Wasserglas und athermanen Verbindungen wie Ruß oder Graphit enthaltende Polymerbeschichtung aufweisen und unter Druck in Abwesenheit von Wasserdampf zu Schaumstoffformkörpern versintert werden.

Ein alternatives Verfahren zum thermischen Verbinden der Schaumpartikel stellt die Hochfrequenz-Verschweißung dar, die u.a. in WO 2001/64414 beschrieben ist. Dabei werden die zu verschweißenden, geschäumten Partikel, insbesondere aus expandierbarem Polystyrol (EPS), expandiertem Polypropylen (EPP) oder expandierbarem Polyethylenterephtalat (EPET)vorab mit einem die elektromagnetischen Strahlung absorbierendem flüssigem Medium wie z.B. Wasser umgeben und anschließend durch Anlegen einer elektromagnetischen Strahlung wie z.B. Mikrowellen miteinander verbunden. Aufgrund der durch die höhere Polarität von thermoplastischen Polymeren bedingten Wasseraufnahme ist dieses Verfahren für Schaumstoffpartikel aus thermoplastischen Elastomeren nur bedingt möglich. Außerdem reicht die zu erzielende Temperatur beim Sieden von Wasser unter Normaldruck von 100°C meist nicht aus um die Elastomerpartikel zu verschweißen. Durch die Wasseraufnahme dringt das Wasser zu stark in die Partikel ein und die Erwärmung erfolgt nicht nur an den Kontaktstellen, sondern auch innerhalb der Partikel. Dadurch können die Partikel vor der Verschweißung kollabieren.

Ein Verfahren mit verbesserter Energiebilanz zum thermischen Verbinden von Schaumstoffpartikeln, insbesondere EPP oder EPS durch das Induktionsheizen ist in DE 10 2013 012 515 A1 beschrieben. Die Herstellung von Formteilen durch Induktionsheizen setzt allerdings eine elektrische Leitfähigkeit der Partikel zumindest an den zu verbindenden Oberflächen voraus. Dies kann durch Beschichtung mit elektrisch leitfähigen Füllstoffen wie z.B. metallisches Pulver oder Ruß, Nanotubes erreicht werden. Die Beschichtung der Partikel kann beispielsweise durch Sprühen erzielt werden.

Aufgabe der vorliegenden Erfindung war es, den genannten Nachteilen abzuhelfen und ein Verfahren zur Herstellung der Partikelschaumstoffe durch thermisches Verbinden von Schaumstoffpartikel mittels hochfrequenter elektromagnetischer Strahlung, insbesondere Mikrowellenstrahlung, bereitzustellen.

Diese Aufgabe wurde durch ein Verfahren zur Herstellung von Partikelschaumstoffen aus Schaumstoffpartikeln auf Basis von thermoplastischen Elastomeren gelöst, bei dem man Schaumstoffpartikel mit einer polaren Flüssigkeit benetzt und in einer Form mittels hochfrequenter elektromagnetischer Strahlung thermisch verbindet, wobei die polare Flüssigkeit einen Siedepunkt im Bereich von 120°C bis 350°C aufweist.

Als thermoplastische Elastomere eignen sich beispielsweise thermoplastische Polyurethane (TPU), thermoplastische Polyesterelastomere (bspw. Polyetherester und Polyesterster), thermoplastische Copolyamide (bspw. Polyethercopolyamide) oder thermoplastische Styrol Butadien-Blockcopolymere. Besonders bevorzugt werden Schaumstoffpartikel auf Basis von thermoplastischem Polyurethan(TPU).

Die Schaumstoffpartikel können durch Imprägnierung von thermoplastischen Elastomergranulaten mit einem Treibmittel in Suspension oder durch Schmelzeimprägnierung von aufgeschmolzenem thermoplastischen Elastomer mit einem Treibmittel und anschließender Granulierung erhalten werden. Geeignete Verfahren zur Herstellung der Schaumstoffpartikel auf Basis thermoplastischer Elastomeren sind beispielsweise in WO 2005/023920, WO 2007/082838, WO 2013/153190 und WO 2014/198779 beschrieben.

Die zur Herstellung der Schaumstoffpartikel eingesetzten thermoplastischen Elastomeren weisen bevorzugt eine Shore-Härte im Bereich von 25A bis 82D, bevorzugt im Bereich von 30A bis 80D, besonders bevorzugt im Bereich von 65A bis 96A, bestimmt nach DIN 53505, auf.

Die Schüttdichte der der eingesetzten Schaumstoffpartikel liegt bevorzugt im Bereich von 30 bis 250 kg/m³.

Für die Verschweißung mit hochfrequenter elektromagnetischer Strahlung sind in der Regel schon geringere Anteile der als Mikrowellenabsorber eingesetzten polaren Flüssigkeit ausreichend. In der Regel benetzt man die Schaumstoffpartikel mit der polaren Flüssigkeit in Anteilen von 0,1 bis 10 Gew.-%, bevorzugt in Anteilen von 1 bis 6 Gew.-%, bezogen auf die eingesetzten Schaumstoffpartikel.

Die polare Flüssigkeit kann mit üblichen Beschichtungsverfahren, wie Besprühen, Tauchen oder Benetzen, mit und ohne zusätzliche Hilfsstoffe auf die Schaumstoffpartikel aufgebracht werden. Hierzu können übliche Mischer, Sprühvorrichtungen, Tauchvorrichtungen bzw. Trommelapparaturen eingesetzt werden.

Besonders bevorzugt werden die Schaumstoffpartikel mit einer polaren Flüssigkeit, welche ein elektrisches Dipolmoment im Bereich von 5 bis 15 * 10⁻³⁰ Cm aufweist, benetzt. Der Siedepunkt der polaren Flüssigkeit liegt im Bereich von 120 bis 350°C, bevorzugt im Bereich von 200 bis 300°C. Wenn der Siedepunkt der polaren Flüssigkeit über dem Schmelzpunkt der thermoplastischen Schaumpartikel liegt, kann im Gegensatz zu Wasserdampf die thermische Verbindung drucklos erfolgen.

Beispiele für geeignete polare Flüssigkeiten sind polare Gruppen aufweisende, mikrowellenabsorbierende Kohlenwasserstoffe. Als polare Gruppen kommen Ester, Amine oder andere Heteroatom-tragende Gruppen in Frage. Bevorzugt als polare Flüssigkeiten werden Ester von Carbonsäuren und Diolen oder Triolen, beispielsweise Glykol- oder Glycerinester der Essig- oder Zitronensäure oder Glykole und flüssige Polyglykole, wie Triethylenglykol oder Tripropylenglykol eingesetzt.

Besonders bevorzugt werden die Schaumstoffpartikel mit 1,2,3-Propantrioltriacetat (Triacetin, Glycerintriacetat), Triethylenglykol oder Tripropylenglykol benetzt.

Die Schaumstoffpartikel können auch funktionale Beschichtungen, beispielsweise abriebbeständige oder niederschmelzende Polyurethanbeschichtungen, aufweisen. Als weitere Additive in der Beschichtung sind hier Wärme- bzw. IR-Strahlung absorbierende Substanzen wie Bornitrit und Aluminiumoxid oder elektrisch leitfähige Kohlenstoffe, wie Graphit zu nennen, die mit den beschriebenen Verfahren ein geschlossenes Netzwerk innerhalb eines Bauteils aus E-TPU liefern können. Es besteht auch die Möglichkeit der Einfärbung mit sehr geringen Pigmentmengen in der Beschichtung ohne die Schaumstoffpartikel in Masse einfärben zu müssen.

Des Weiteren können verschiedenste Fasern (Kunststoff, Glas, Metall) vor der Verschweißung auf die Oberfläche der Schaumstoffartikel aufgebracht werden, die nach der Verarbeitung ein eigenes Netzwerk innerhalb der Bauteile ausbilden. Hierdurch können sich verbesserte mechanische Eigenschaften ergeben.

Überraschenderweise wurde gefunden, dass durch das erfindungsgemäße Verfahren eine gezielte thermische Verbindung (Verschweißung) der Schaumstoffpartikel bei ausreichender Mikrowellenabsorption und geringem Energieeintrag erreicht wird.

Das thermische Verbinden der Schaumstoffpartikel erfolgt in einer Form mittels hochfrequenter elektromagnetischer Strahlung, insbesondere mittels Mikrowellen. Als hochfrequent wird elektromagnetische Strahlung mit Frequenzen von mindestens 100 MHz verstanden. In der Regel wird elektromagnetische Strahlung im Frequenzbereich zwischen 100 MHz und 300 GHz verwendet. Bevorzugt werden Mikrowellen im Frequenzenbereich zwischen 0,5 und 100 GHz, besonders bevorzugt 0,8 bis 10 GHz und Bestrahlungszeiten zwischen 0,1 bis 15 Minuten verwendet. Bevorzugt wird der Frequenzbereich der Mikrowelle auf das Absorptionsverhalten der polaren Flüssigkeit angepasst oder umgekehrt die polare Flüssigkeit anhand des Absorptionsverhaltens entsprechend dem Frequenzbereich des verwendeten Mikrowellengerätes ausgewählt.

Das erfindungsgemäße Verfahren ermöglicht ein Verschweißen der Schaumstoffpartikel in einem sehr breiten Frequenzbereich. Auch in Frequenzbereichen, in denen Wasser nicht zur Resonanz angeregt wird, erwärmen sich die beschichteten Schaumstoffpartikel vorzugsweise an den Kontaktflächen so dass diese verschweißen bevor sich die gesamten Partikel aus dem Inneren heraus zu stark aufheizen und kollabiert.

Erfindungsgemäß werden zunächst die Schaumpartikel dünn mit der polaren Flüssigkeit benetzt, in eine nicht Mikrowellen absorbierende Form gegeben und anschließend mittels Mikrowelle verschweißt.

Die polare Flüssigkeit wird dünn auf der Oberfläche der E-TPU Partikel verteilt und haftet auf dieser bereits nach kurzer Zeit gut und homogen an. Bei der Bestrahlung in der Mikrowelle im Anschluss, absorbiert die frische Umhüllung die Energie fast ausschließlich, wodurch gezielt die Partikeloberfläche erhitzt wird und dadurch eine sehr gute Verschmelzung mit den benachbarten Partikeln erreicht wird. Die polare Flüssigkeit löst sich anschließend in den thermoplastischen Elastomeren- Partikel wie ein Weichmacher und hat keinen negativen Einfluss auf die Eigenschaften des Partikelschaumstoffes nach der Verschweißung.

Aufgrund der Polarität nimmt E-TPU leicht die polare Flüssigkeit auf. Bei der weiteren Behandlung bzw. Erwärmung der E-TPU Partikel zieht der Weichmacher (im Gegensatz zu PS, PP Partikeln) in die E-TPU Partikel ein und stört so die Haftung zwischen den einzelnen Schaumpartikeln nicht, wenn dies zu Partikelschaumstoffen thermisch verbunden werden.

Gegenstand der Erfindung sind weiterhin Partikelschaumstoffe, die nach dem oben beschriebenen, erfindungsgemäßen Verfahren erhältlich sind. Sie weisen vorzugsweise eine Bruchdehnung nach DIN 53504 im Bereich von 50 bis 800 %, besonders bevorzugt von 100 bis 300 % auf. Die Raumgewichte der Schaumstoffplatten, ermittelt nach DIN EN ISO 1183-1, A betragen in der Regel 100 bis 400 g/l.

Für die erfindungsgemäßen Partikelschaumstoffe sind Anwendungen in allen Bereichen denkbar, wo ein besonders elastischer und zugleich leichter Werkstoff gefordert ist, zum Beispiel beim so genannten Protective Packaging, also der intelligenten Verpackung hochsensibler Güter. Sie sind aber auch geeignet für Sportböden sowie für Anwendungen im Automobilbau oder im Maschinenbau.

Aufgrund der elastomeren Eigenschaften sind die erfindungsgemäßen Partikelschaumstoffe für Anwendungen im Sport-, Schuh- und Verpackungsbereich, beispielsweise für als Sicherheitsschuhe oder als Verpackung von elektronischen Bauteilen oder Geräten geeignet.

### Beispiele

**Einsatzstoffe:**

| | |
|---|---|
| E-TPU | Infinergy® 32-100 U10, expandierte, überwiegend geschlossenzellige Schaumstoffpartikel auf Basis von thermoplastischem Polyurethan, erhalten durch Aufschäumen von granuliertem Elastollan® der BASF Polyurethanes GmbH unter Druck und hoher Temperatur, Schüttdichten 110 g/l und 150 g/l. |
| Polare Flüssigkeiten: | Glycerintriacetat (Triacetin, 1,2,3-Propantrioltriacetat,) |
| | Triethylenglykol |
| | Tripropylenglykol |
| | Acetyltributylcitrat |
| Klebstoff: | Elastopave 6550/101 der BASF Polyurethanes GmbH, kompaktes, 2-Komponenten Polyurethan-System |

### Geräte:

Labormikrowellensystem des Typs MLS-Ethos plus mit einer Höchstleistung von 2,5 kW.

### Messmethoden:

Zur Bestimmung der Schüttdichte wurde ein 200 ml Gefäß mit den expandierten Partikeln gefüllt und das Gewicht mittels einer Waage bestimmt. Dabei kann von einer Genauigkeit von ± 5 g/l ausgegangen werden.

Die Raumgewichte der Schaumstoffplatten wurde nach DIN EN ISO 1183-1, A ermittelt.

Die Stauchhärte der Schaumstoffplatten wurde in Anlehnung an DIN EN ISO 3386 bei 10%, 25%, 50% und 75% Stauchung gemessen.

Die Druckverformung der Schaumstoffplatten (Schuhschaum) wurde nach Konditionierung (6h/50°C/50%) nach ASTM D395 gemessen.

Die Rückprallelastizität der Schaumstoffplatten wurde nach DIN 53512 bestimmt.

Bruchdehnung und Zugfestigkeit wurden nach DIN 53504 bestimmt.

### Beispiel B1:

45 Gewichtsteile der E-TPU-Schaumpartikel mit einer Schüttdichte von 110 g/l wurden zusammen mit 2,4 Gewichtsteilen Glycerintriacetat in ein Gefäß gegeben. Durch Schütteln des Gefäßes waren die E-TPU-Schaumpartikel innerhalb 60 Sekunden vollständig mit Glycerintriacetat benetzt.

47,4 Gramm der benetzten und noch losen Einzelpartikel wurden in eine mikrowellengeeignete Form mit der Abmessung 200mm x 200mm x 10mm gefüllt. Durch einen höhenverstellbaren Deckel wurde leichter Druck auf die Partikel ausgeübt. Diese gefüllte Form wurde schräg im 30° Winkel auf dem äußeren Rand des Labormikrowellendrehtellers platziert und für 40 Sekunden mit einer Leistung von 400 Watt bestrahlt, die Form wurde um 180° in der Vertikalachse gedreht und weitere 40 Sekunden mit 400 W bestrahlt, anschließend wurde die Form um weitere 90° in der Vertikalachse gedreht und nun waagrecht weitere 40 Sekunden mit 400 W bestrahlt. Die Form wurde aus der Mikrowelle entnommen und in einem Wasserbad auf Raumtemperatur abgekühlt. Anschließend konnte eine zusammengeschweißte Schaumstoffplatte entnommen werden.

### Beispiel B2:

55 Gewichtsteile der E-TPU-Schaumpartikel mit einer Schüttdichte von 130 g/l wurden zusammen mit 2,8 Gewichtsteilen Glycerintriacetat in ein Gefäß gegeben. Durch Schütteln des Gefäßes waren die E-TPU-Schaumpartikel innerhalb 60 Sekunden vollständig mit Glycerintriacetat benetzt.
57,8 Gramm der benetzten und noch losen Einzelpartikel wurden in eine mikrowellengeeignete Form mit der Abmessung 200mm x 200mm x 10mm gefüllt. Durch einen höhenverstellbaren Deckel wurde leichter Druck auf die Partikel ausgeübt. Diese gefüllte Form wurde schräg im 30° Winkel auf dem äußeren Rand des Labormikrowellendrehtellers platziert und für 45 Sekunden mit einer Leistung von 400 Watt bestrahlt, die Form wurde um 180° in der Vertikalachse gedreht und weitere 45 Sekunden mit 400 W bestrahlt, anschließend wurde die Form um weitere 90° in der Vertikalachse gedreht und nun waagrecht weitere 45 Sekunden mit 400 W bestrahlt. Die Form wurde aus der Mikrowelle entnommen und in einem Wasserbad auf Raumtemperatur abgekühlt. Anschließend konnte eine zusammengeschweißte Schaumstoffplatte entnommen werden.

### Beispiel B3:

55 Gewichtsteile der E-TPU-Schaumpartikel mit einer Schüttdichte von 130 g/l wurden zusammen mit 2,8 Gewichtsteilen Triethylenglykol in ein Gefäß gegeben. Durch Schütteln des Gefäßes waren die E-TPU-Schaumpartikel innerhalb 60 Sekunden vollständig mit Triethylengylkol benetzt.

57,8 Gramm der benetzten und noch losen Einzelpartikel wurden in eine mikrowellengeeignete Form mit der Abmessung 200mm x 200mm x 10mm gefüllt. Durch einen höhenverstellbaren Deckel wurde leichter Druck auf die Partikel ausgeübt. Diese gefüllte Form wurde schräg im 30° Winkel auf dem äußeren Rand des Labormikrowellendrehtellers platziert und für 40 Sekunden mit einer Leistung von 400 Watt bestrahlt, die Form wurde um 180° in der Vertikalachse gedreht und weitere 40 Sekunden mit 400 W bestrahlt, anschließend wurde die Form um weitere 90° in der Vertikalachse gedreht und nun waagrecht weitere 40 Sekunden mit 400 W bestrahlt. Die Form wurde aus der Mikrowelle entnommen und in einem Wasserbad auf Raumtemperatur abgekühlt. Anschließend konnte eine zusammengeschweißte Schaumstoffplatte entnommen werden.

### Beispiel B4:

55 Gewichtsteile der E-TPU-Schaumpartikel mit einer Schüttdichte von 130 g/l wurden zusammen mit 2,8 Gewichtsteilen Acetyltributylcitrat in ein Gefäß gegeben. Durch Schütteln des Gefäßes waren die E-TPU-Schaumpartikel innerhalb 60 Sekunden vollständig mit Acetyltributylcitrat benetzt.

57,8 Gramm der benetzten und noch losen Einzelpartikel wurden in eine mikrowellengeeignete Form mit der Abmessung 200mm x 200mm x 10mm gefüllt. Durch einen höhenverstellbaren Deckel wurde leichter Druck auf die Partikel ausgeübt. Diese gefüllte Form wurde schräg im 30° Winkel auf dem äußeren Rand des Labormikrowellendrehtellers platziert und für 45 Sekunden mit einer Leistung von 400 Watt bestrahlt, die Form wurde um 180° in der Vertikalachse gedreht und weitere 45 Sekunden mit 400 W bestrahlt, anschließend wurde die Form um weitere 90° in der Vertikalachse gedreht und nun waagrecht weitere 45 Sekunden mit 400 W bestrahlt. Die Form wurde aus der Mikrowelle entnommen und in einem Wasserbad auf Raumtemperatur abgekühlt. Anschließend konnte eine zusammengeschweißte Schaumstoffplatte entnommen werden.

### Vergleichsversuch V1:

60 g unbeschichtete E-TPU-Schaumstoffpartikel mit einer Dichte von 110 g/l wurden mit Wasserdampf zu Schaumstoffformkörpern verschweißt.

### Vergleichsversuch V2:

60 g unbeschichtete E-TPU-Schaumstoffpartikel mit einer Dichte von 110 g/l wurden mit 9 Gew.-% eines Klebstoffes zu Schaumstoffformkörpern verklebt.

### Vergleichsversuch V3:

60 g unbeschichtete E-TPU-Schaumstoffpartikel mit einer Dichte von 110 g/l wurden mit 23 Gew.-% eines Klebstoffes zu Schaumstoffformkörpern verklebt.

Die Eigenschaften der Schaumstoffplatten aus den Beispielen B1 - B4 und den Vergleichsversuchen V1 - V3 sind in Tabelle 1 zusammengestellt.

Die Schaumstoffplatten der Beispiele B1 bis B4 weisen gegenüber den verklebten Schaumstoffplatten der Vergleichsversuche V2 und V3 eine höhere Rückprallelastizität auf.

Vorteilhaft ist weiterhin, dass durch das Mikrowellenverschweißen (Beispiele B1) geringe Bauteilgewichte möglich sind als durch das Wasserdampfverschweißen (Vergleichsversuch V1). Eine Erhöhung der Rückprallelastizität sowie eine Reduzierung des Raumgewichtes wird als vorteilhaft betrachtet.

Besonders vorteilhaft ist außerdem die hohe Bruchdehnung der Schaumstoffplatten der Beispiele B2 und B3 gegenüber den standardmäßig mit Wasserdampf verschweißten Schaumstoffplatten (Vergleichsversuch V1) und den verklebten Schaumstoffplatten (V2 undV3). Gewünscht ist besonders die Kombination geringes Raumgewicht, hohe Zugfestigkeit und Bruchdehnung, sowie hoher Rückprall um leichte Bauteile mit guten mechanischen Eigenschaften zu erhalten.

**Tabelle 1: Eigenschaften der Schaumstoffplatten aus den Beispielen B1 - B4 und den Vergleichsversuchen V1 - V3**

| | B1 | B2 | B3 | B4 | V1 | V2 | V3 |
|---|---|---|---|---|---|---|---|
| Stauchhärte 10% [kPa] | 8,3 | 9,6 | 3,4 | 3,9 | 78 | 20,3 | 26,8 |
| Stauchhärte 25%[kPa] | 44,4 | 51,7 | 22,6 | 24,5 | 170 | 53 | 60,3 |
| Stauchhärte 50%[kPa] | 157,3 | 261,7 | 139,7 | 138,0 | 366,7 | 142 | 156,9 |
| Stauchhärte 75%[kPa] | 814 | 2439 | 1127 | 1183 | 1822 | 540,3 | 669,5 |
| Raumgewicht [g/t] | 189 | 265 | 301 | 299 | 253,5 | 135 | 152 |
| Rückprallelastizität [%] | 58 | 59 | 56 | 57 | 70 | 55 | 55 |
| Zugfestigkeit [kPa] | 313 | 599 | 561 | 499 | 1168 | 120 | 292 |
| Bruchdehnung [%] | 124 | 189 | 183 | 185 | 108 | 32 | 42 |

## Patentansprüche

1. Verfahren zur Herstellung von Partikelschaumstoffen aus Schaumstoffpartikeln auf Basis von thermoplastischen Elastomeren, **dadurch gekennzeichnet, dass** man Schaumstoffpartikel mit einer polaren Flüssigkeit benetzt und in einer Form mittels hochfrequenter elektromagnetischer Strahlung thermisch verbindet,
wobei die polare Flüssigkeit einen Siedepunkt im Bereich von 120°C bis 350°C aufweist.

2. Verfahren nach Anspruch 1, **dadurch gekennzeichnet, dass** man die Schaumstoffpartikel mittels Mikrowellen im Frequenzbereich zwischen 100 MHz und 300 GHz thermisch verbindet.

3. Verfahren nach Anspruch 1 oder 2, **dadurch gekennzeichnet, dass** man Schaumstoffpartikel aus thermoplastischem Polyurethan einsetzt.

4. Verfahren nach einem der Ansprüche 1 bis 3, **dadurch gekennzeichnet, dass** man Schaumstoffpartikel mit einer Schüttdichte im Bereich von 30 bis 250 kg/m³ einsetzt.

5. Verfahren nach einem der Ansprüche 1 bis 4, **dadurch gekennzeichnet, dass** man die Schaumstoffpartikel mit der polaren Flüssigkeit in Anteilen von 0,1 bis 10 Gew.-%, bezogen auf die Schaumstoffpartikel, benetzt.

6. Verfahren nach einem der Ansprüche 1 bis 5, **dadurch gekennzeichnet, dass** man als polare Flüssigkeit (a) Ester von Carbonsäuren und Diolen oder Triolen oder (b) Glykole oder flüssige Polyglykole oder Mischungen von (a) und (b) einsetzt.

7. Verfahren nach einem der Ansprüche 1 bis 6, **dadurch gekennzeichnet, dass** man als polare Flüssigkeit Glykol- oder Glycerinester der Essig- oder Zitronensäure, Triethylenglykol, Tripropylenglykol oder Mischungen davon einsetzt.

8. Partikelschaumstoff, erhältlich nach einem Verfahren gemäß den Ansprüchen 1 bis 7.

9. Verwendung des Partikelschaumstoffs nach Anspruch 8 für Verpackungen oder Schuhe.

## Claims

1. A method for producing bead foams from foam beads based on thermoplastic elastomers, which comprises foam beads being wetted with a polar liquid and joined together thermally in a mold via high-frequency electromagnetic radiation,
where the polar liquid has a boiling point in the range from 120°C to 350°C.

2. The method according to claim 1 wherein the foam beads are joined together thermally via microwaves in the frequency range between 100 MHz and 300 GHz.

3. The method according to claim 1 or 2 wherein foam beads of thermoplastic polyurethane are used.

4. The method according to any one of claims 1 to 3 wherein foam beads having a bulk density in the range from 30 to 250 kg/m³ are used.

5. The method according to any one of claims 1 to 4 wherein the foam beads are wetted with the polar liquid in proportions of 0.1 to 10 wt%, based on the foam beads.

6. The method according to any one of claims 1 to 5 wherein the polar liquid used comprises (a) esters of carboxylic acids and diols or triols or (b) glycols or liquid polyglycols or mixtures of (a) and (b).

7. The method according to any one of claims 1 to 6 wherein the polar liquid used comprises glycol esters of acetic or citric acid, glycerol esters of acetic or citric acid, triethylene glycol, tripropylene glycol or mixtures thereof.

8. A bead foam obtainable by a method according to claims 1 to 7.

9. The method of using the bead foam according to claim 8 for packaging or footwear.

## Revendications

1. Procédé pour la préparation de mousses de particules à partir de particules de mousse à base d'élastomères thermoplastiques, **caractérisé en ce qu'**on mouille des particules de mousse avec un liquide polaire et on les relie thermiquement dans un moule au moyen d'un rayonnement électromagnétique à haute fréquence, le liquide polaire présentant un point d'ébullition dans la plage de 120 °C à 350 °C.

2. Procédé selon la revendication 1, **caractérisé en ce qu'**on relie thermiquement les particules de mousse au moyen de micro-ondes dans un domaine de fréquence compris entre 100 MHz et 300 GHz.

3. Procédé selon la revendication 1 ou 2, **caractérisé en ce qu'**on utilise des particules de mousse composées de polyuréthane thermoplastique.

4. Procédé selon l'une quelconque des revendications 1 à 3, **caractérisé en ce qu'**on utilise des particules de mousse dotées d'une densité apparente dans la plage de 30 à 250 kg/m³.

5. Procédé selon l'une quelconque des revendications 1 à 4, **caractérisé en ce qu'**on mouille les particules de mousse avec le liquide polaire en des proportions de 0,1 à 10 % en poids, par rapport aux particules de mousse.

6. Procédé selon l'une quelconque des revendications 1 à 5, **caractérisé en ce qu'**on utilise en tant que liquide polaire (a) des esters d'acides carboxyliques et de diols ou de triols ou (b) des glycols ou des polyglycols liquides ou des mélanges de (a) et de (b).

7. Procédé selon l'une quelconque des revendications 1 à 6, **caractérisé en ce qu'**on utilise en tant que liquide polaire des esters de glycol ou de glycérine de l'acide acétique ou de l'acide citrique, le triéthylèneglycol, le tripropylèneglycol ou des mélanges correspondants.

8. Mousse de particules, pouvant être obtenue selon un procédé selon les revendications 1 à 7.

9. Utilisation de la mousse de particules selon la revendication 8 pour des emballages ou des chaussures.
